# EUROPEAN PATENT APPLICATION

(11) **EP 2 377 491 A2**
(43) Date of publication of application: **19.10.2011**
(21) Application number: 11162458.1
(22) Date of filing: 14.04.2011
(51) Int. Cl.: A61C 8/00

(54) **One-piece obliquely implanted dental implant**

(30) Priority: 15.04.2010 TW 099206799
(71) Applicant: Chen, Chun-Leon, Las Vegas, NV 89146 (US)
(72) Inventor: Chen, Chun-Leon, Las Vegas, NV 89146 (US)
(74) Representative: Ruschke, Hans Edvard

(57) **Abstract**

A one-piece obliquely implanted dental implant having an implant body integrally formed with an abutment; a first central axis of the implant body forms a tilting angle against a second central axis of the abutment, which angle is 5∼25°, and an engaging recess extends from the abutment downwards along the first central axis, a rotation tool thus can be used to implant the implant body by rotating in the oblique front gum.

## Description

### BACKGROUND OF THE INVENTION

### 1. Field of the invention

The present invention relates to a one-piece obliquely implanted dental implant, and especially to a dental implant which is implanted in an oblique front gum for mounting a tooth crown.

### 2. Description of the Prior Art

In an tooth implanting operation, normally an implant is embedded in a gum in the first place, and an abutment which is separated from and which is exposed to the outside of the surface of the implant is installed on the implant, for conveniently mounting a tooth crown on the abutment to complete a tooth implanting operation.

For the purpose of reducing the time for performing the tooth implanting operation, an abutment is integrally formed with an implant; form example, a prior art, U.S. Patent No. 5,961,328 titled "DENTAL IMPLANT" provided such a technique.

However, by the fact that the gum of a patient may tilt some time, particularly at the area of the front gum; when a conventional one-piece dental implant is implanted into the gum, the abutment above it is subjected to being not perpendicular to the surface of the gum, this results that the tooth crown mounted become oblique, and the tooth implanting operation fails. This problem needs to be eliminated.

### SUMMARY OF THE INVENTION

The present invention thereby provides a one-piece obliquely implanted dental implant to be implanted in an oblique front gum; the dental implant comprises:
an implant body having a first central axis being formed on its upper section a cylindrical portion with fine thread, and on its lower section a conical portion with coarse thread;
an abutment integrally connected to the top of the cylindrical portion with fine thread of the implant body for mounting a tooth crown; the abutment has a second central axis which tilts against the first central axis; and
an engaging recess extending from the abutment downwards along the first central axis, and forms at least at the bottom of the engaging recess a plurality of engaging surfaces, these engaging surfaces are engaged with a rotation tool having a connecting head matching with the engaging surfaces, so that the implant body can be anchored in the oblique front gum.

Moreover, the present invention provides a one-piece obliquely implanted dental implant, the range of tilting angle of the first central axis of the implant body against the second central axis of the abutment is 5∼25°.

The one-piece obliquely implanted dental implant of the present invention has a special structure, in order that when in surgical operation, it can be conveniently and fast implanted in the oblique front gum, thus chance of success can be largely increased.

The present invention will be apparent in its structural feature and its effect of using after reading the detailed description of the preferred embodiment thereof in reference to the accompanying drawings.

### BRIEF DESCRIPTION OF THE DRAWINGS

Fig. 1 is a plan view of the present invention;
Fig. 2 is a sectional view of the present invention;
Fig. 3 is a sectional view taken from a sectional line A-A in Fig. 1;
Fig. 4 is a schematic view showing a rotation tool used to cooperate with the engaging recess of the present invention;
Fig. 5 is a schematic view showing completion of the operation of tooth implanting of the present invention.

### DETAILED DESCRIPTION OF THE PREFERRED EMBODIMENT

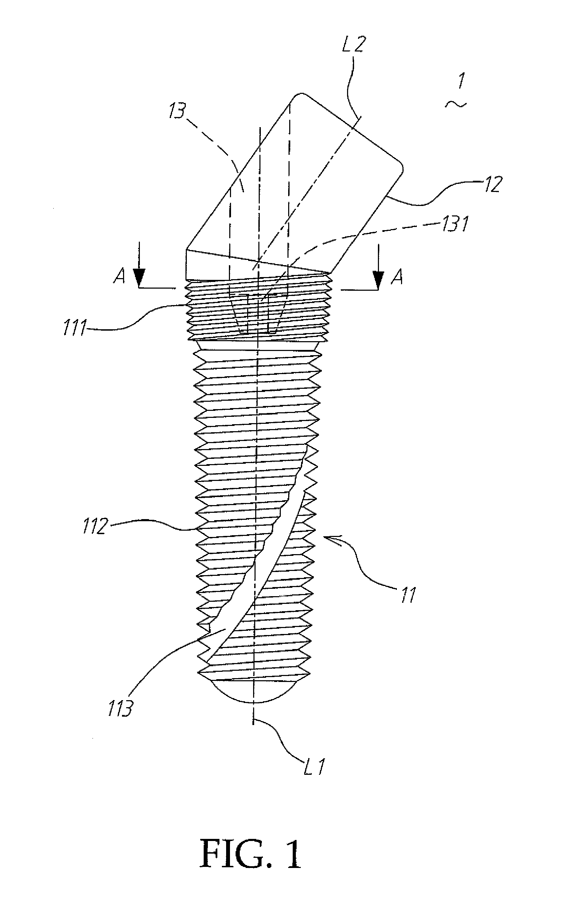

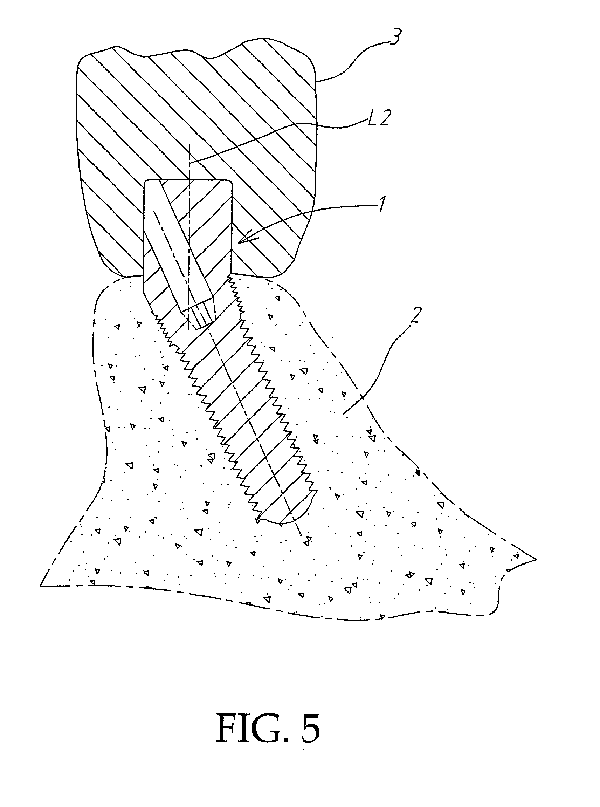

Referring to Figs. 1∼3, the present invention provides a one-piece obliquely implanted dental implant 1 to be implanted in an oblique front gum 2; and as shown in Fig. 5, the oblique front gum 2 is mounted thereon with a tooth crown 3. The dental implant of the present invention mainly comprises an implant body **11**, an abutment **12** and an engaging recess **13**.

The implant body **11** has a first central axis L1 being formed on its upper section a cylindrical portion **111** with fine thread, and on its lower section a conical portion **112** with coarse thread; the conical portion **112** with coarse thread is provided on its surface with one to multiple thread shaped cuts **113**. By rotating the implant body **11**, the conical portion **112** with coarse thread and the cylindrical portion **111** with fine thread do cutting actions, and can be firmly implanted in the oblique front gum **2**.

The abutment **12** is integrally connected to the top of the cylindrical portion **111** with fine thread of the implant body **11** for mounting a tooth crown **3** (please refer to Fig. 5); the abutment **12** has a second central axis L2 which tilts against the first central axis L1 with an angle in the range of 5∼25°.

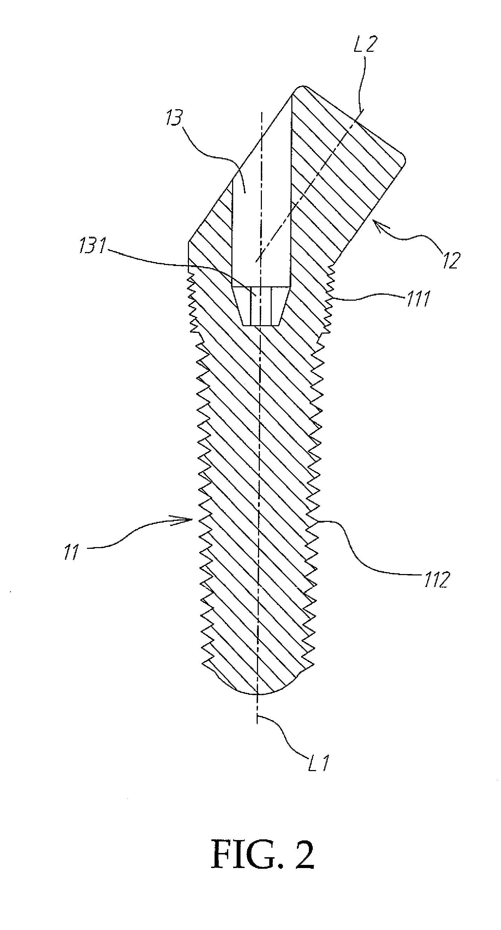

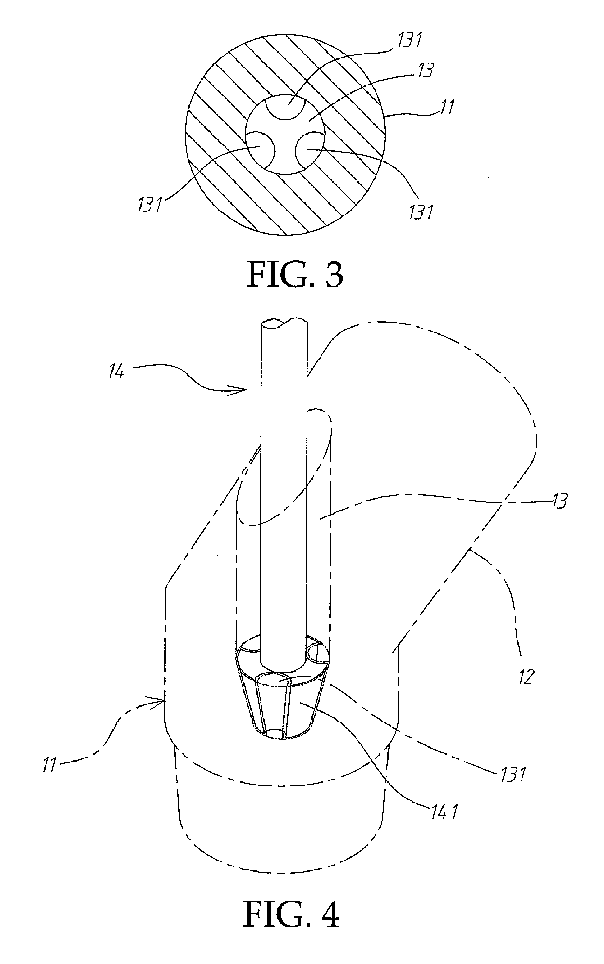

The engaging recess **13**, referring to Fig. 2, extends from the abutment **12** downwards along the first central axis L1, and forms at least at the bottom of the engaging recess **13** a plurality of engaging surfaces **131**, there are three engaging surfaces **131** shown in Fig. 3; these engaging surfaces **131** are engaged with a rotation tool **14** having a connecting head **141** matching with the engaging surfaces **131** (as shown in Fig. 4), so that the implant body **11** can be anchored in the oblique front gum **2**.

In practice, the connecting head **141** of the rotation tool **14** is extended into the engaging recess **13** to make engagement of the connecting head **141** with the engaging surfaces **131**; then the bottom end of the implant body **11** is pointed to the surface of the oblique front gum **2** and is rotated to embed the implant body **11** into the oblique front gum **2**, while the abutment **12** is exposed to the out side of the surface of the oblique front gum **2**, and the second central axis **L2** is perpendicular to the surface of the oblique front gum **2**. After healing of the wound, the tooth crown **3** can be fixedly mounted on the abutment **12.**

By virtue that the one-piece obliquely implanted dental implant **1** of the present invention has a special structure, in order that when in surgical operation, it can be conveniently and fast implanted in the oblique front gum **2**, thus chance of success can be largely increased.

In conclusion, the present invention meets the requirement of patentable elements including novelty and advancement, and what we claim will be declared in the claims followed.

## Claims

1. A one-piece obliquely implanted dental implant (1) to be implanted in an oblique front gum (2), said dental implant comprises:
an implant body (11) having a first central axis being formed on its upper section a cylindrical portion (111) with fine thread, and on its lower section a conical portion (112) with coarse thread;
an abutment (12) integrally connected to a top of said cylindrical portion (111) with fine thread of said implant body (11) for mounting a tooth crown (3); said abutment (12) has a second central axis which tilts against said first central axis; and
an engaging recess (13) extending from said abutment (12) downwards along said first central axis, and forms at least at a bottom of said engaging recess (13) a plurality of engaging surfaces (131), said engaging surfaces (131) are engaged with a rotation tool (14) having a connecting head (141) matching with said engaging surfaces (131), so that said implant body (11) is anchored in said oblique front gum (2).

2. The one-piece obliquely implanted dental implant (1) as claimed in claim 1, wherein range of tilting angle of said first central axis of said implant body (11) against said second central axis of said abutment (12) is 5∼25°.

3. The one-piece obliquely implanted dental implant (1) as claimed in claim 1, wherein said conical portion (112) with coarse thread of said implant body (11) is provided on its surface with at least a thread shaped cut (113).
